# EUROPEAN PATENT APPLICATION

(11) **EP 3 552 768 A1**
(43) Date of publication of application: **16.10.2019**
(21) Application number: 19167163.5
(22) Date of filing: 03.04.2019
(51) Int. Cl.: B25F 3/00

(54) **POWER TOOL AND METHOD FOR CONTROLLING A POWER TOOL**

(30) Priority: 04.04.2018 US 201815945478
(71) Applicant: TTI (Macao Commercial Offshore) Limited, Macao (MO)
(72) Inventor: Gregorich, Brent N, Easley, SC South Carolina 29642 (US); Moylan, Julia H, Anderson, SC South Carolina 29621 (US); Causey, Brandon, 1430 Greenville, SC South Carolina 29601 (US); Smith, Daniel, Greenville, SC South Carolina 29607 (US)
(74) Representative: Stevenson-Hill, Jack Patrick

(57) **Abstract**

A power tool (100) includes a tool implement (115) and a tool base (105) releasably attachable to the tool implement (115). The tool implement (115) includes a working end that is drivable. The tool base (105) includes a base housing (130) , an electric motor (160) within the base housing (130), a rotatable output shaft (175) coupled to drive the working end of the tool implement (115) when the tool base (105) is attached to the tool implement (115), an engagement sensor (237) configured to indicate positive engagement of the tool implement (115) and the tool base (105), and a controller (155) coupled to the engagement sensor (237) and including an electronic processor (156). The controller (155) is configured to enable a function of the motor (160) in response to receiving an indication of positive engagement from the engagement sensor (237).

## Description

### TECHNICAL FIELD

The present invention relates to power tools and, more particularly to power tools including a power tool base couplable with a variety of power tool implements.

### BACKGROUND

Power tool systems generally utilize the rotation of an electric motor to provide useful torque for operations such as drilling, driving fasteners, and the like. Some existing power tool systems include a tool base and interchangeable tool implements for selectively attaching to the tool base. By using different tool implements, the power tool system can be adapted for different operations.

### SUMMARY OF THE INVENTION

In a first aspect of the invention, there is provided a power tool includes a tool implement and a tool base releasably attachable to the tool implement. The tool implement includes a working end that is drivable. The tool base includes a base housing, a(n electric) motor within the base housing, a rotatable output shaft coupled to the motor and configured to drive the working end of the tool implement when the tool base is attached to the tool implement, an engagement sensor, and a controller coupled to the engagement sensor. The engagement sensor is configured to indicate positive engagement of the tool base and the tool implement. The controller includes an electronic processor and is configured to enable a function of the motor in response to receiving an indication of positive engagement from the engagement sensor.

In one embodiment, the function of the motor that is enabled is a driving function whereby, in response to actuation of a trigger, the controller drives the motor.

In one embodiment, the tool implement and the tool base are configured for electronic communication, and the controller is configured to enable the electronic communication in response to the tool base receiving the tool implement.

In one embodiment, the controller enables the electronic communication prior to enabling the function of the motor.

In one embodiment, the controller is configured to receive an information parameter transmitted by the tool implement. The information parameter transmitted by the tool implement defines at least one selected from the group consisting of a function of a trigger of the tool base, a function of a light trigger configured to control a light source of the tool implement, and a function of a control button of the tool base.

In one embodiment, the controller is further configured to disable the function of the motor previously enabled in response to receiving an indication of disengagement from the engagement sensor.

In one embodiment, the engagement sensor is rotationally fixed to the tool base, the tool base further includes an actuation projection that is configured to be rotated with respect to the tool base to selectively actuate the engagement sensor to indicate whether the tool implement is positively engaged to the tool base.

In one embodiment, to positively engage the tool implement to the tool base, the tool implement is configured to be received by the tool base and to rotate a rotatable ring having the actuation projection to thereby cause the actuation projection to actuate the engagement sensor.

In one embodiment, the rotatable ring is biased to a position indicative of a lack of positive engagement of the tool implement and the tool base.

In one embodiment, the rotatable ring is positioned on a front side of a front plate, the engagement sensor is positioned on a rear side of the front plate, and the actuation projection extends through an arcuate opening of the front plate.

In one embodiment, the tool base can releasably attach to the tool implement in a plurality of orientations.

In a second aspect of the invention, there is provided a method for controlling a power tool includes receiving a tool implement by a tool base, the tool base having a motor coupled to a rotatable output shaft, the tool implement having a working end driven (or drivable) by the rotatable output shaft, and the tool base and the tool implement being releasably attachable. The method further includes detecting, with an engagement sensor, a positive engagement of the tool implement and the tool base. The method further includes enabling, by with a controller coupled to the engagement sensor, a function of the motor of the tool base in response to detecting the positive engagement.

In one embodiment, the method also includes enabling, with the controller, electronic communication between the tool base and the tool implement in response to the tool base receiving the tool implement; and receiving, by the controller, an information parameter transmitted by the tool implement.

In one embodiment, the controller enables the electronic communication prior to enabling the function of the motor.

In one embodiment, the information parameter is an identifier of the tool implement.

In one embodiment, the method also includes: defining, based on the information parameter transmitted by the tool implement, at least one selected from the group consisting of a function of a trigger of the tool base, a function of a light trigger configured to control a light source of the tool implement, and a function of a control button of the tool base.

In one embodiment, the method also includes: disabling, by the controller, the function of the motor previously enabled in response to receiving an indication of disengagement from the engagement sensor.

In one embodiment, the method also includes: providing, by the controller, an alert to a user indicating a lack of engagement in response to receiving an indication of disengagement from the engagement sensor.

In one embodiment, the method also includes: disabling, by the controller, the function of the motor previously enabled in response to a predetermined amount of time elapsing after receiving an indication of disengagement from the engagement sensor.

In one embodiment, the method also includes: indicating, by an implement status indicator of the tool base, a function status of the tool implement.

In a third aspect of the invention, there is provided the tool implement in the power tool of the first aspect.

In a fourth aspect of the invention, there is provided the tool base in the power tool of the first aspect.
Where appropriate, any of the optional features discussed above in relation to one aspect of the invention may be applied to another aspect of the invention.

### BRIEF DESCRIPTION OF THE DRAWINGS

FIG. 1 is a perspective view of a power tool couplable to at least three power tool implements in one embodiment of the invention.
FIG. 2 is a perspective view of the power tool base of the power tool of FIG. 1.
FIG. 3A is a partial front view of the power tool base of the power tool of FIG. 1 with a ring in a first position.
FIG. 3B is a partial front view of the power tool base of the power tool of FIG. 1 with the ring in a second position.
FIG. 4 is a partial perspective view of the power tool base of FIG. 3A with a portion of a housing of the power tool base removed.
FIG. 5A is a perspective view of the first power tool implement of the power tool of FIG. 1.
FIG. 5B is a perspective view of the second power tool implement of the power tool of FIG. 1.
FIG. 5C is a perspective view of the third power tool implement of the power tool of FIG. 1.
FIG. 6 is a block diagram of the power tool of FIG. 1.
FIG. 7 is a flow diagram of a method for controlling the power tool of FIG. 1.
FIG. 8 is a flow diagram of a method for controlling the power tool of FIG. 1.

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways.

### DETAILED DESCRIPTION

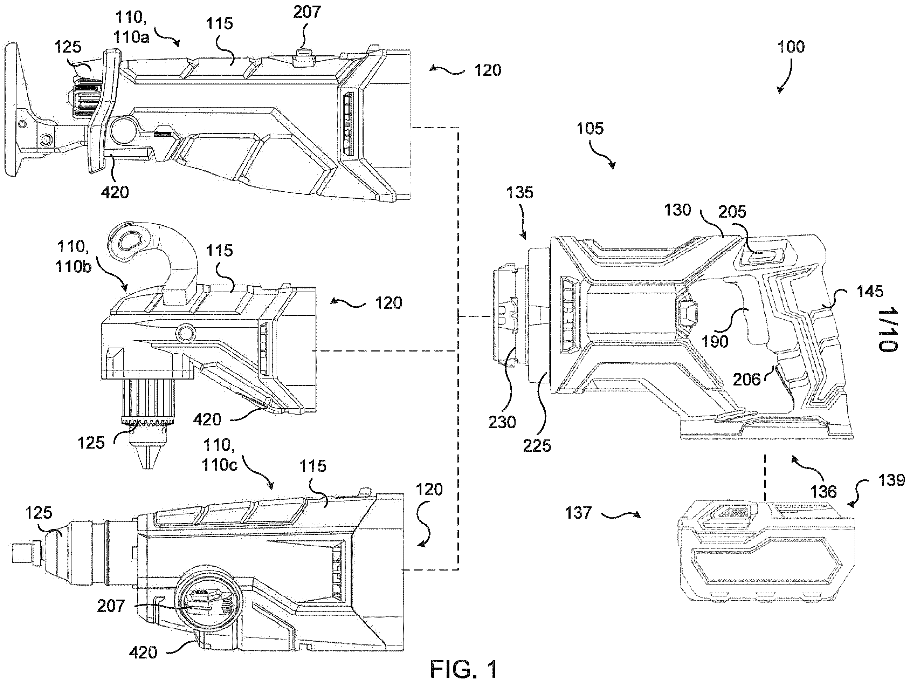

FIG. 1 illustrates a power tool 100 that includes a power tool base 105 and three power tool implements 110. The power tool base 105 is selectively couplable to the power tool implements 110, individually referred to as a first power tool implement 110a, a second power tool implement 110b, and a third power tool implement 110c. The illustrated first power tool implement 110a is a reciprocating saw implement, the illustrated second power tool implement 110b is a 90-degree drill implement, and the illustrated third power tool implement 110c is a hammer-drill implement. In other embodiments, the power tool base 105 can be selectively coupled to more or less than three power tool implements 110. In further embodiments, the power tool implement 110 can be different types of power tool implements (e.g., rotary saw implement, shear implement, grinder implement, screwdriver implement, sander implement, magnetic levitation implement, jaw implement, riveting implement, etc.). Each power tool implement 110 includes a housing 115 having an attachment end 120 that interfaces with the power tool base 105 and a working end 125. In one embodiment, the working end 125 is a chuck that selectively secures a tool (e.g., saw blade, twist drill bit, screwdriver tool bit, etc.) to the power tool implement 110.

The power tool base 105 includes a housing 130 with a power tool implement interface assembly 135 and a battery pack interface 136. The power tool implement interface assembly 135 is configured to electrically and mechanically couple to the attachment end 120 of each of the power tool implements 110. The battery pack interface 136 is configured to electrically and mechanically couple to a power tool battery pack 137. The power tool battery pack 137 includes, for example, a plurality of battery cells (not shown) within a housing 138 and a tool interface 139 for coupling to the battery pack interface 136.

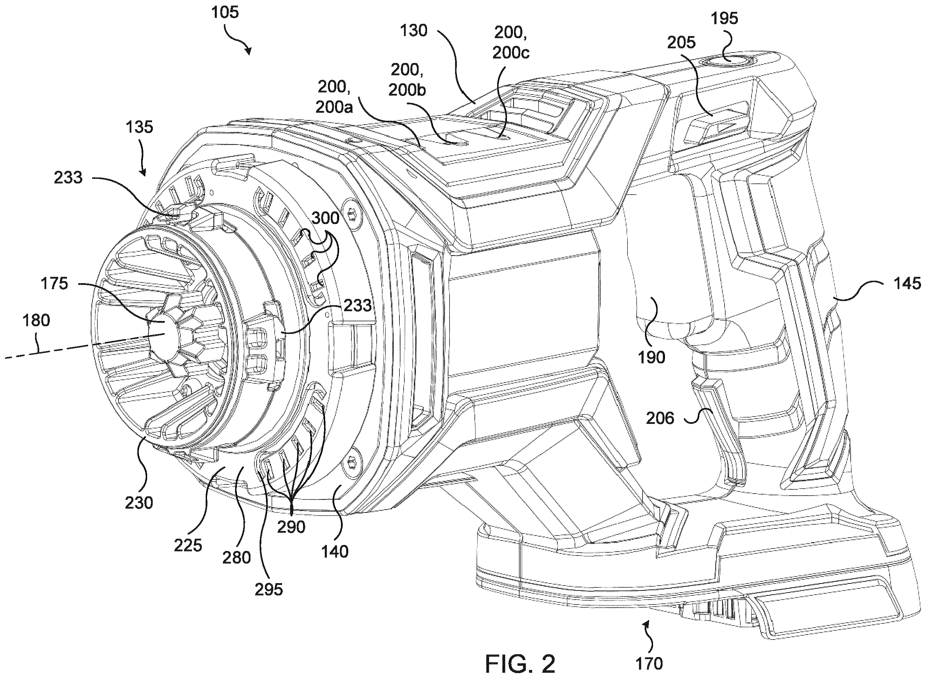

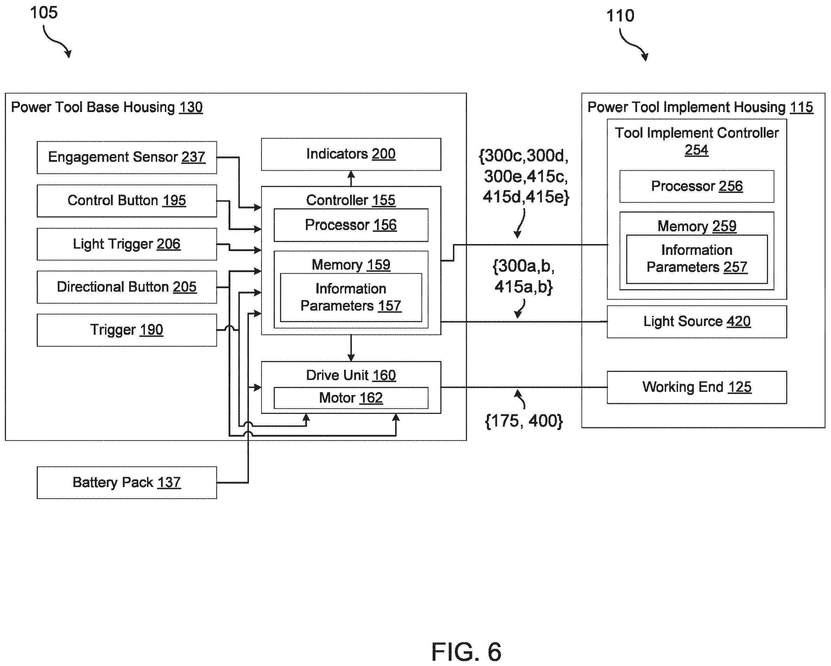

With reference to FIG. 2, the power tool implement interface assembly 135 is located adjacent a front plate or end 140 of the housing 130, and a grip portion 145 is located adjacent a rear end of the housing 130. The power tool implement interface assembly 135 includes an output spindle 175, which extends away from the front plate 140 of the housing 130, and which is rotatably driven by a drive unit 160 (see FIG. 6) about a rotational axis 180. The illustrated output spindle 175 includes teeth that extend radially outward from the rotational axis 180.

The power tool base 105 also includes implement status indicators 200 (e.g., visual indicators and/or audible indicators) that are coupled to a top surface of the housing 130. In the illustrated embodiment, the status indicators 200 are individually referred to as a light-emitting diode (LED) 200a, 200b, and 200c, respectively. The status indicators 200 provide status indications for the power tool base 105, the power tool implement 110, or both. In other embodiments, the power tool base 105 can include more or fewer than three status indicators 200.

The power tool base 105 further includes a directional actuation button 205 that is coupled to the housing 130 above the power actuation trigger 190. The directional actuation button 205 is operable to select a rotational direction of the output spindle 175. For example, when the directional actuation button 205 is in a first position, the output spindle 175 rotates in a first rotational direction (e.g., clockwise) and when the directional actuation button 205 is moved into a second position, the output spindle 175 rotates in an opposite second rotational direction (e.g., counterclockwise). The directional actuation button 205 is also positionable in an intermediate position between the first and second positions so that the trigger 190 is disabled. For example, the trigger 190 may be prevented from being mechanically or electrically actuated. In some embodiments, the directional actuation button 205 is operational with some of the power tool implements 110 and disabled for other power tool implements 110. For example, in one embodiment, the directional actuation button 205 is not operational with the reciprocating saw implement 110a, but the directional actuation button 205 is operational with the 90-degree drill implement 110b and the hammer-drill implement 110c. When the directional actuation button 205 is not operational, the output spindle 175 is permitted to rotate in a first rotational direction, but cannot be switched to permit driving of the output spindle 175 in a second operational direction. In further embodiments, the directional actuation button 205 is partially operational with some of the power tool implements 110 (e.g., the directional actuation button 205 may only be operable to select between a first rotational direction and a neutral state).

The housing 130 also supports a light actuation trigger 206 located on the grip portion 145 below the power actuation trigger 190. The light actuation trigger 206 selectively operates a light source 420 (see FIGS. 1 and 6) that is coupled to the power tool implement 110, as described in more detail below.

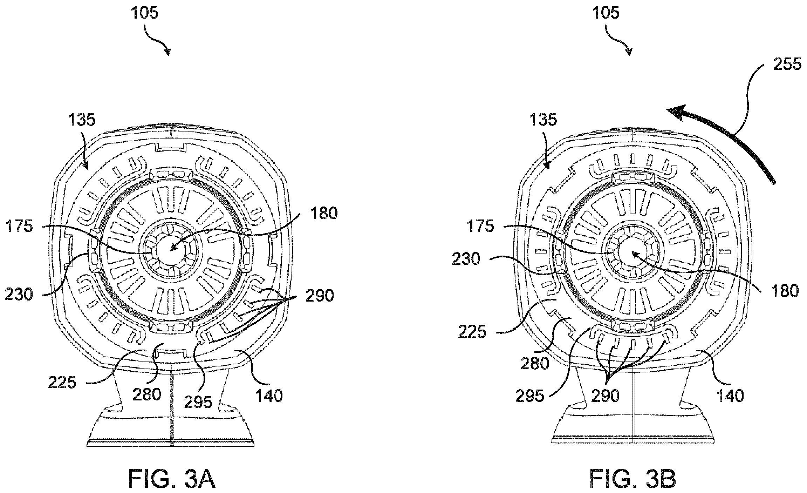

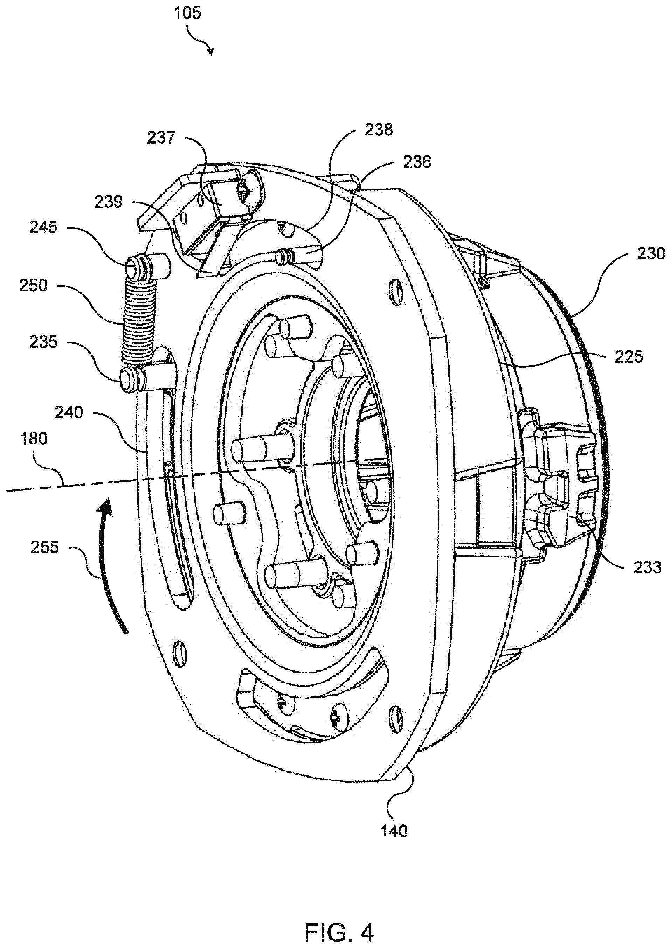

The illustrated tool implement interface assembly 135 includes an electrical interface portion or ring 225 and a mechanical interface portion or hub 230. The ring 225 and the hub 230 are axially fixed along the rotational axis 180 relative to the housing 130. The hub 230 further includes four radial protrusions 233 that extend radially from an outer circumference of the hub 230. The radial protrusions 233 are evenly spaced (e.g., spaced apart at 90 degree increments) around the outer circumference of the ring 225. In other embodiments, the ring 225 may include more or fewer than four radial protrusions 233 and may have different spacings. Additionally, the hub 230 is rotatably fixed along the rotational axis 180 relative to the housing 130 and the front plate 140. However, the ring 225 is rotatably coupled to the housing 130 about the rotational axis 180 such that the ring 225 is configured to rotate about rotational axis 180 relative to the front plate 140. The ring 225 is also biased in a first direction 255 (e.g., counterclockwise direction) relative to the hub 230 (see FIGS. 3B and 4). In other embodiments, the ring 225 can be rotatably biased in a clockwise direction relative to the hub 230.

In the illustrated embodiment, an outer circumference of the ring 225 includes four grooves that are evenly spaced (e.g., spaced apart at 90 degree increments) around the outer circumference of the ring 225. In other embodiments, the ring 225 may include more or fewer than four grooves and may have different spacings. The ring 225 also includes a front surface 280 that includes groups of interface apertures. In the illustrated embodiment, the ring 225 includes four groups of interface apertures that include electrical terminal apertures 290 (e.g. five electrical terminal apertures) and a guide aperture 295. Each of the five electrical terminal apertures 290 provides access to one of five terminal connectors 300 (e.g., resilient terminal clips). In other embodiments, the groups of interface apertures can include more or fewer than five electrical terminal apertures 290, more or fewer than five terminal connectors 300, and/or more than one guide aperture 295.

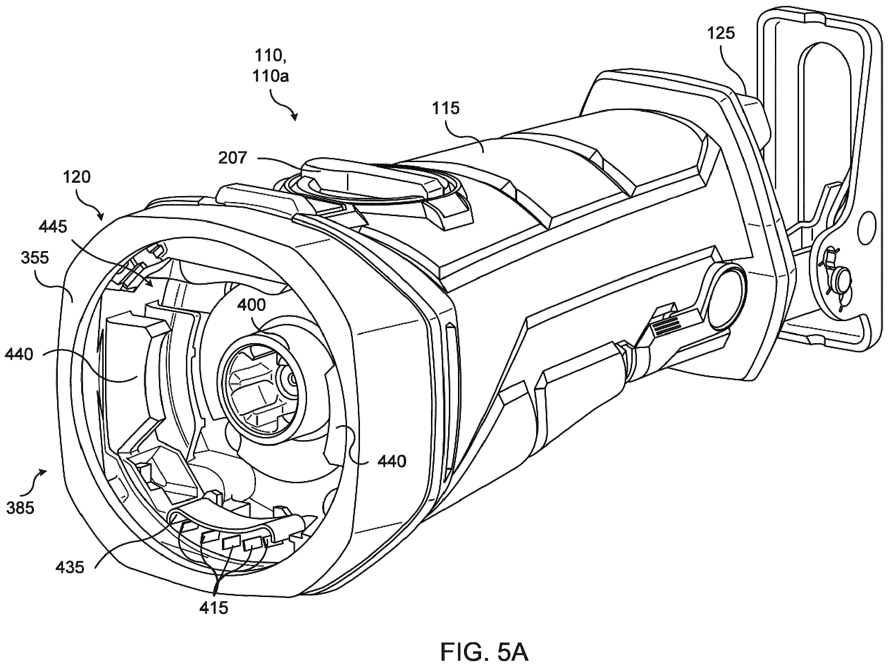

As shown in FIG. 3A, the ring 225 is initially positioned in an unlocked position (e.g. prior to insertion of a power tool implement 110). The power tool implement 110 is then aligned along axis 180 and inserted into the power tool base 105. The electrical terminal apertures 290 and the guide aperture 295 receive, respectively, terminal protrusions (see 415 of FIGS. 5A-5C) and guide protrusions (see 435 of FIGS. 5A-5C) of the power tool implement 110. Once fully inserted into the power tool base 105 along the axis 180, the power tool implement 110 is rotated opposite the first direction 255 (e.g., a clockwise direction) until it reaches a locked position, as shown in FIG. 3B, in which the power tool implement 110 and the power tool base 105 are positively engaged. The power tool implement 110 rotates opposite the first direction 255 relative to the hub 230, which is rotatably fixed. Rotation of the power tool implement 110 rotates the ring 225 opposite the first direction 255, and positions radial tabs 440 (see FIGS. 5A-C) behind the radial protrusions 233 in the axial direction. At least in part because the radial protrusions 233 of the hub 230 are rotationally aligned with and frontward of the radial tabs 440, the power tool implement 110 may be prevented from translation along the axis 180 by the hub 230 in the locked position.

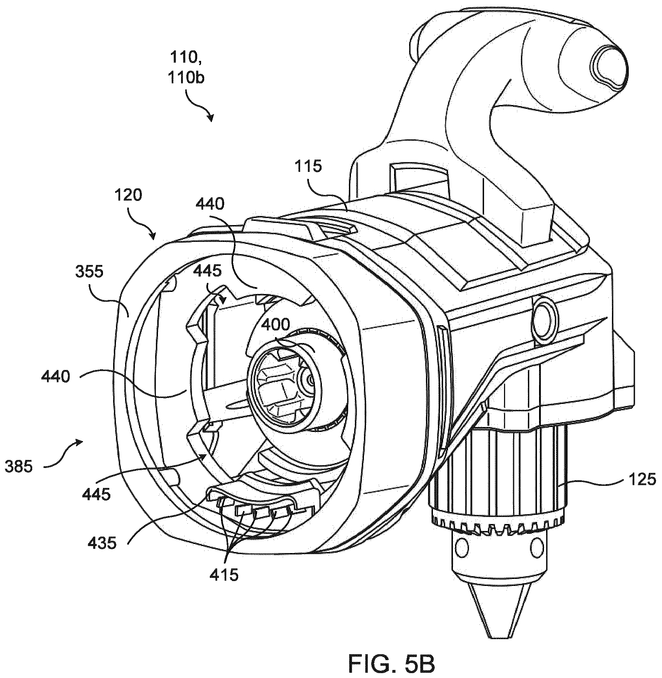

To decouple the power tool implement 110 from the power tool base 105, the power tool implement 110 is rotated in the first direction 255 from the locked position to the unlocked position. Once in the unlocked position, the radial protrusions 233 are no longer aligned with the radial tabs 440 of the power tool implement 110, but, rather, are aligned with cutouts or gaps (see, e.g., gaps 445 in FIG. 5B) of the power tool implement 110. Then, the power tool implement 100 may be removed along the axis 180. In the illustrated embodiment, the rotation between the unlocked position and the locked position is approximately 45 degrees. However, in other embodiments, the rotation between unlocked and locked positions may be greater or less than 45 degrees. Additionally, or alternatively, positive engagement between the power tool implement 110 and the power tool base 105 may be achieved with translation or rotation of the power tool implement 110 in a direction other than along the axis 180 or opposite the first direction 255.

FIG. 4 illustrates a partial perspective view of the power tool base 105 with the ring 225 in the unlocked position of FIG. 3A. In particular, the ring 225 includes a ring pin 235 that extends through an arcuate opening 240 of the front plate 140 into the housing 130. Likewise, a plate pin 245 extends from the front plate 140 in the same direction as the ring pin 235. The ring pin 235 and the plate pin 245 are coupled together by a biasing member 250 (e.g., a coil spring), which is positioned within the housing 130. As such, the ring 225 is rotatably biased in a first direction 255 (e.g., counterclockwise direction as viewed in FIG. 3B) relative to the hub 230. As described in further detail below, the ring 225 is biased to a position indicative of a lack of positive engagement of the tool implement 110 and the tool base 105. In further embodiments, more than one biasing member 250 can be coupled to the ring 225 and a portion of the housing 130 and/or the hub 230. In yet further embodiments, the ring 225 can be rotatably biased relative to the hub 230 by a different biasing member (e.g., a torsional spring).

The ring 225 further includes an actuation pin 236, also referred to as an actuation projection, that extends in the same direction as the ring pin 235 through an arcuate opening 238 of the front plate 140 into the housing 130. Within the housing 130, an engagement sensor 237 is fixed along the path of the actuation pin 236. As illustrated, the engagement sensor 237 is mounted to a rear surface of the front plate 140, whereas the ring 225 is positioned on a front side of the front plate 140. Accordingly, as the power tool implement 110 rotates the ring 225 opposite the first direction 255, the actuation pin 236 of the ring 225 rotates within the arcuate opening 238 and actuates the engagement sensor 237. Stated another way, the engagement sensor 237 is rotationally fixed to the front plate 140 of the tool base 105, and the actuation pin 236 is configured to be rotated with respect to the tool base 105 to selectively actuate the engagement sensor 237 to indicate whether the tool implement 110 is positively engaged to the tool base 105.

In the illustrated embodiment, the engagement sensor 237 is a snap-acting switch that outputs a binary signal representing either a "not-engaged" state or an "engaged" state. For example, as illustrated, the engagement sensor 237 may include a movable member 239 biased into an open position, as illustrated in FIG. 4. Upon positive engagement of the power tool implement 110, the actuation pin 236 engages and moves the movable member 239 into a closed position. In the open position, the engagement sensor 237 provides a first signal indicative of a lack of positive engagement. In the closed position, the engagement sensor 237 provides a second signal indicative of positive engagement. The signal is received by a controller of the power tool base 105 (see controller 155 in FIG. 6).

In other embodiments, the engagement sensor 237, the actuation pin 236, or both, are positioned such that the engagement sensor 237 is partially actuated by the actuation pin 236 before the power tool implement 110 has been rotated to the locked position and positively engaged with the power tool base 105. Accordingly, the engagement sensor 237 may detect partial engagement between the power tool implement 110 and the power tool base 105. Alternatively, the engagement sensor 237 and actuation pin 236 may be implemented with a different sensor and actuating component. For example, the engagement sensor 237 may be implemented as a Hall-effect sensor and the actuation pin 236 may be implemented as a magnetic element. For example, in a non-engaged state, the actuation pin 236 is positioned away or out-of-range of the Hall-effect sensor, which then outputs a first binary signal indicating a lack of positive engagement. In contrast, in an engaged-state, the actuation pin 236 is near to the Hall-effect sensor, which then provides a second binary signal indicating positive engagement. Further, in some embodiments, the Hall-effect sensor may provide an output with further granularity such that partial engagement is also indicated when the actuation pin 236 is between an initial, non-engaged state (see, e.g., FIG 4) and an engaged state. Further, one or both of the engagement sensor 237 and the actuation pin 236 may be implemented in the power tool implement 110.

With reference to FIGS. 5A-5C, the first power tool implement 110a, the second power tool implement 110b, and the third power tool implement 110c are illustrated, respectively. Components of the power tool implements 110 having like reference numbers in FIGS. 5A-5C have similar functionality and are, accordingly, described together below.

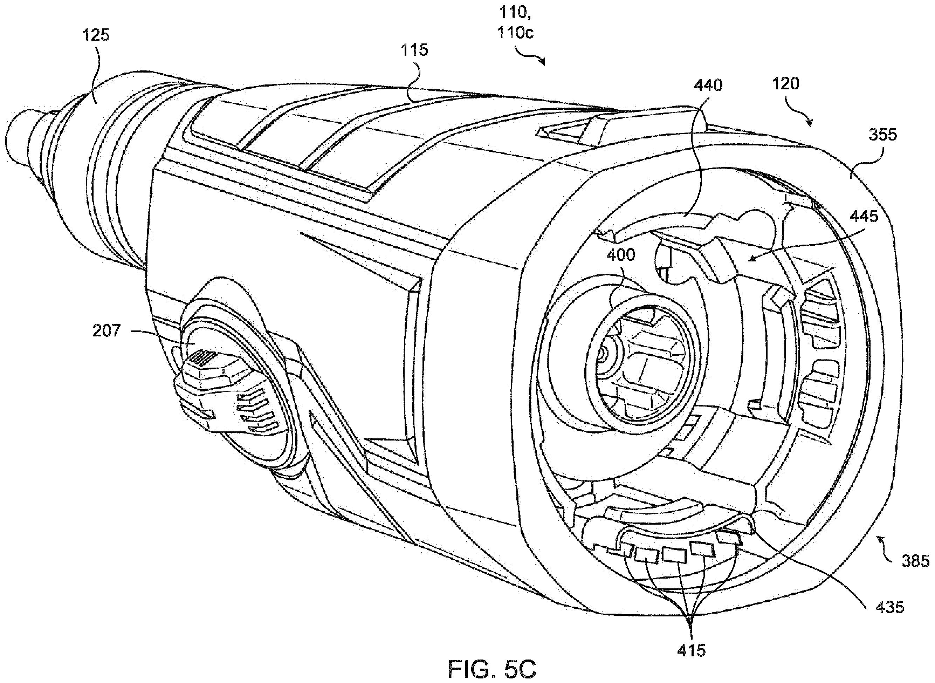

In FIGS. 5A-5C, the illustrated power tool implements 110 include an attachment end housing 355 formed at the attachment end 120. The power tool implements 110 include a power tool base interface assembly 385 positioned within a cavity partially defined by an opening of the attachment end housing 355. The power tool base interface assembly 385 includes an input spindle 400, which includes teeth that are rotatable about the rotational axis 180 (when the power tool implement 110 is coupled to the power tool base 105). The input spindle 400 is operable to drive the working end 125 of the power tool implement 110. In addition, input spindle 400 is sized and configured to engage the output spindle 175 of the power tool base 105 to transfer rotational power from the power tool base 105 to the power tool implement 110. In some embodiments, the power tool implement 110 includes a transmission configured to transfer rotational power from the input spindle 400 to the working end 125 to enable a plurality of functions of the working end 125. Two example functions include driving the working end 125 of the reciprocating saw implement 110a (FIG. 5A) in a linear fashion or in an elliptical fashion. In further embodiments, the power tool implement 110 includes a tool function switch 207 to select among the functions of the working end 125. For example, the tool function switch 207 of the reciprocating saw implement 110a (FIG. 5A) is operable to select between a "linear reciprocation" function and an "elliptical reciprocation" function, and the tool function switch 207 of the hammer-drill implement 110c (FIG. 5C) is operable to select between a "hammer-only" function, a "drill-only" function, and a "hammer-drill" function.

The interface assembly 385 of the power tool implement 110 includes electrical terminal protrusions 415. The illustrated embodiment includes five electrical terminal protrusions 415. In other embodiments, the electrical terminal protrusions 415 can include more or fewer than five terminal protrusions. In further embodiments, the types of electrical terminal protrusions 415 can be arranged in any order. The illustrated interface assembly 385 also includes a guide protrusion 435 that at least partially surrounds the electrical terminal protrusions 415. The interface assembly 385 further includes the radial tabs 440 separated by gaps 445, described above, to secure the power tool implement 110 to the power tool base 105.

The illustrated power tool implement 110 can be selectively coupled to the power tool base 105 in four different orientations by coupling the power tool implement interface assembly 135 with the power tool base interface assembly 385. The power tool implement 110 is fully inserted onto the power tool base 105 when the output spindle 175 engages with the input spindle 400. In one embodiment, the attachment end housing 355 can also abut the front side 140 of the power tool base 105 when the power tool implement 110 is fully inserted onto the power tool base 105. Once fully inserted, the power tool implement 110 is locked onto the power tool base 105. When the power tool implement 110 is locked onto the power tool base 105, the side surfaces of the attachment end housing 355 are substantially flush with the sides of the power tool base 105.

FIG. 6 illustrates a block diagram of the power tool 100. The housing 130 supports a controller 155 and a drive unit 160, with the controller 155 electrically coupled to the drive unit 160. The controller 155 includes an electronic processor 156 and an electronic memory 159 capable of storing information, such as information parameters 157. The drive unit 160 includes a motor 162 (e.g., a brushless electric motor). The drive unit 160 and the controller 155 are electrically coupled to the power tool battery pack 137 (e.g., a lithium-ion battery pack, etc.), which is selectively coupled to a bottom side 170 of the housing 130 (see FIG. 2). In some embodiments, the drive unit 160 further includes a switch bridge (not shown) controlled by the controller 155 to drive the motor 162 by selectively applying power from the power tool battery pack 137 to stator coils of the motor 162 (e.g., by energizing pairs of stator coils in a cyclic pattern). The drive unit 160 is also directly coupled (e.g., direct drive) to the output spindle 175. In other embodiments, the drive unit 160 includes a planetary transmission positioned between and indirectly coupling the output spindle 175 and the electric motor 162. In some embodiments, various components of the base housing 130 (e.g., the processor 156, the memory 159, the indicators 200, the switch bridge of the drive unit 160) are arranged on one or more circuit boards within the base housing 130.

Although the memory 159 is shown as separate from the processor 156, portions of or the entire memory 159 may be incorporated into the processor 156. For example, the memory 159 may comprise one or more memories, such as an EEPROM, and may further include registers within the processor 156, any or all of which may store program instructions or information parameters 157. For example, firmware of the power tool may be stored in the EEPROM, whereas the information parameters 157 may be stored in one or more registers of the processor 156.

The controller 155 is connected to the power actuation trigger 190. Responsive to an actuation of the power actuation trigger 190, the controller 155 controls the drive unit 160 to drive the output spindle 175. The controller 155 is further connected to the control button 195, the directional actuation button 205, and the light actuation trigger 206. For some tool implements 110, responsive to an actuation of the control button 195, the controller 155 toggles a lock-on or lock-off function of the power actuation trigger 190. For other tool implements 110, responsive to an actuation of the control button 195, the controller 155 changes the speed of the motor 162 or changes the direction of the motor 162. The information parameters 257 provided by the tool implements 110, described in further detail below, define the function of the control button 195.

Responsive to an actuation of the directional actuation button 205, the controller 155 selects a rotational direction of the output spindle 175 by selectively driving the motor 162 in the direction indicated by the directional actuation button 205. In some embodiments, responsive to an actuation of the directional actuation button 205, the controller 155 disables rotation of the output spindle 175. Further, in some embodiments, the controller 155 selects the rotational direction of the output spindle 175 based on one or more of the tool head and a transmission state within the tool head. For example, when the hammer-drill implement 110c is attached, the controller 155 may drive the output spindle 175 in a first direction, such that the working end 125 rotates in a clockwise or forward direction. By way of additional example, when the right-angle drill implement 110b is attached, the controller 155 may drive the output spindle 175 in a second direction opposite the first direction, such that the working end 125 rotates in a clockwise or forward direction. Accordingly, positioning of the directional actuation button 205 may correspond to an output direction of the working end 125, and the controller 155 may be configured to selective drive the output spindle 175 in a direction which causes the working end 125 to rotate in the output direction corresponding to the position of the direction actuation button 205.

In some embodiments, responsive to an actuation of the tool function switch 207 or other included sensors or switches (not shown) included in the power tool implement 110, the controller 155 changes the function of one or more of the directional actuation button 205, the control button 195, the light actuation trigger 206, and the trigger 190. For example, actuation of the tool function switch 207 changes the directional actuation button 205 to prevent reverse motor direction, changes the duration that the light source 420 is enabled in response to depression of the light actuation trigger 206 or the trigger 190, disables the function of the control button 195 as a lock on-off selector, and the like. In some embodiments, actuation of the tool function switch 207 or other included sensors or switches changes a motor parameter, such as motor speed or motor direction. In some embodiments, the information parameters 257 provided by the tool implements 110, described in further detail below, define the function of the tool function switch 207 and other included sensors or switches.

The controller 155 is connected to the terminal connectors 300. The terminal connectors 300 include five connectors, for example, a first terminal connectors 300a is a power terminal connector, a second terminal connectors 300b is a ground terminal connector, a third terminal connectors 300c is a first communication or data terminal connector, a fourth terminal connectors 300d is a second communication or data terminal connector, and a fifth terminal connectors 300e is a clock or timer terminal connector.

Implement status indicators 200 of the power tool base 105 are coupled to the controller 155 to visually indicate a status of the power tool implement 110 coupled to the power tool base 105. For example, the first LED 200a indicates when the power tool implement 110 is coupled to the power tool base 105, and the power tool implement 110 is ready to operate. In some embodiments, status indicators 200 may visually indicate a function status of the power tool implement 110 coupled to the power tool base 105. For example, the second LED 200b indicates whether the control button 195 has been or can be depressed to enable the lock-on function of the power actuation trigger 190. The third LED 200c indicates whether the control button 195 needs to be depressed to disable the lock-off function of the power actuation trigger 190. In other embodiments, the power tool base 105 can include more or fewer than three LEDs. In further embodiments, the implement status indicators 200 can signal other statuses or function statuses of the power tool implement 110 and the power tool base 105 (e.g., the power tool implement 110 is not positively engaged to the power tool base 105, the motor 162 is overheating, the power actuation trigger 190 is actuated when the power tool implement 110 is not positively engaged to the power tool base 105, one or more functions of the power tool implement 110 have been disabled, etc.).

The power tool implement 110 includes a tool implement controller 254 supported within the housing 115. The controller 254 includes an electronic processor 256 and an electronic memory 259 storing information parameters 257. The housing 115 supports electrical terminal protrusions 415. The electrical terminal protrusions 415 include five protrusions, for example, a first terminal protrusion 415a is a power terminal protrusion, a second terminal protrusion 415b is a ground terminal protrusion, a third terminal protrusion 415c is a first communication or data terminal protrusion, a fourth terminal protrusion 415d is a second communication or data terminal protrusion, and a fifth terminal protrusion 415e is a clock or timer terminal protrusion. The clock terminal protrusion 415e provides a timer for the communication terminal protrusions 415c, 415d. In some embodiments, the clock terminal protrusion 415e is used to initiate communication, for example, in conjunction with one or more of the data terminal protrusions 415c, 415d. The power terminal protrusion 415a and the ground terminal protrusion 415b are electrically coupled to a light source 420 (see also FIG. 1) and operable to deliver power to the light source 420. The light source 420 is operable to illuminate a desired work area (e.g., the area where the tool, which is coupled to the power tool implement 110, engages a work surface). In some embodiments, the power terminal protrusion 415a and the ground terminal protrusion 415b are electrically coupled to and operable to deliver power to the tool implement controller 254. The communication terminal protrusions 415c, 415d and the clock terminal protrusion 415e are coupled to the controller 254.

Accordingly, when the power tool implement 110 is positively engaged to the power tool base 105, the terminal connectors 300a, 300b, 300c, 300d, and 300e are coupled to the terminal protrusions 415a, 415b, 415c, 415d, and 415e, respectively. The terminal connectors 300a, 300b are operable to transmit power to the terminal protrusions 415a, 415b. Responsive to an actuation of the light actuation trigger 206, the controller 155 transmits power to the light source 420. The communication terminal connectors 300c, 300d are operable to transmit and receive data with the communication terminal protrusions 415c, 415d. The fifth terminal connector is operable to transmit a clock signal to the clock terminal protrusion 415e. The communication terminal protrusions 415c, 415d are operable to convey information parameters 257 from the controller 254 of the specific power tool implement 110 to the controller 155 of the power tool base 105.

For example, the information parameters 257 can include one or more of an identifier of the power tool implement 110, data defining whether the working end 125 of the specific power tool implement 110 can be rotated in two directions in which the directional actuation button 205 would be operable, data defining whether the specific power tool implement 110 is operable with the lock-off function that is disabled by the control button 195, data defining whether the specific power tool implement 110 is operable with the lock-on function that is enabled by the control button 195, data defining the function of the control button 195 as a lock on-off button, a motor speed selector, or a motor direction selector, and a status of the power tool implement 110. In addition, in some embodiments, the information parameters 257 include current limits, bit package or serial communication, data defining functionality of the power actuation trigger 190, data defining functionality of the light actuation trigger 206, data defining a motor stall duration threshold after which the motor drive 160 is disabled, and the like.

As an example of data defining functionality of the power actuation trigger 190, the information parameters 257, in some embodiments, defines the power actuation trigger 190 to be either a variable speed trigger or an on-off, binary trigger. When functioning as a variable speed trigger, the controller 155 drives the motor 162 with power or at a speed proportional to the amount that the trigger is depressed. For example, when the trigger is depressed 10%, the controller 155 drives the motor 162 with a pulse width modulation (PWM) signal having a 10% duty cycle, but when the trigger is depressed 75%, the controller 155 drives the motor 162 with a PWM signal having a 75% duty cycle. The particular depression percentages and corresponding duty cycles are merely examples, and different scaling is used in other embodiments. When functioning as an on-off binary trigger, the controller 155 drives the motor 162 when the power actuation trigger 190 is depressed and without variation based on the amount of depression, and the controller 155 ceases driving the motor 162 when the power actuation trigger 190 is not depressed. In some embodiments, one or more of the power tool implements 110a-c indicate in their respective information parameters 257 that the power actuation trigger 190 is a variable speed trigger. In some embodiments, other power tool implements 110, such as a grinder or circular saw implement, indicate in their respective information parameters 257 that the power actuation trigger 190 is an on-off binary trigger.

The controller 155 is connected to the engagement sensor 237 and configured to receive an output from the engagement sensor 237 indicative of at least positive engagement of the tool implement 110 with the power tool base 105. In response to detection of positive engagement of the power tool implement 110 and the power tool base 105 based on the output of the engagement sensor 237, the controller 155 enables one or more functions of the drive unit 160. In some embodiments, prior to detecting positive engagement of the power tool implement 110 and the power tool base 105 with the engagement sensor 237, one or more functions of the drive unit 160 are disabled as a default. For example, the directional actuation button 205 may be operable to select a rotational direction of the output spindle 175, but depression of the power actuation trigger 190 into the grip portion 145 is ignored by the controller 155 and the drive unit 160 does not rotate the output spindle 175 until a later enabling of a driving function of the motor 162 of the drive unit 160.

The controller 155 may also enable or disable electronic communication with the power tool implement 110 based, at least in part on detection of positive engagement from the engagement sensor 237. For example, response to a detection of positive engagement of the power tool implement 110 and the power tool base 105, the controller 155 enables electronic communication with the power tool implement 110. In some embodiments, prior to detecting positive engagement of the power tool implement 110 and the power tool base 105 with the engagement sensor 237, electronic communication with the tool implement 110 is disabled as a default. For example, depression of the light actuation trigger 206 is ignored by the controller 155 and the controller 155 does not transmit power to a light source 420 until a later enabling of electronic communication. In other embodiments, prior to detecting positive engagement of the power tool implement 110 and the power tool base 105 with the engagement sensor 237, electronic communication between the controller 155 and the power tool implement 110 is enabled as a default.

Additionally, the controller 155 may enable or disable electronic communication prior to or independent of detection of positive engagement from the engagement sensor 237. For example, the controller 155 may detect a partial engagement of the power tool implement 110 and the power tool base 105 with the engagement sensor 237. Alternatively, or in addition, the power tool 100 may include an additional engagement sensor (not shown) to detect partial engagement. In some embodiments, partial engagement is detected by the controller 155 detecting a change in circuit conductivity or capacitance when the terminal protrusions 415 are inserted into the terminal connectors 300. Responsive to detection of the partial engagement, the controller 155 enables electronic communication with the power tool implement 110. For example, electronic communication may be disabled by default, and responsive to detection of the partial engagement, the controller 155 enables electronic communication with the power tool implement 110. Accordingly, the power tool implement 110 may transmit information parameters 257 to the power tool base 105 prior to the engagement sensor 237 detecting positive engagement.

Further, in some embodiments, the controller 155 disables the electronic communication in response to the engagement sensor 237 no longer detecting positive engagement. In other embodiments, the controller 155 does not disable the electronic communication in response to the engagement sensor 237 no longer detecting positive engagement. For example, subsequent a loss of detection of positive engagement by the engagement sensor 237, depression of the power actuation trigger 190 into the grip portion 145 may be ignored by the controller 155, but depression of the light actuation trigger 206 would still cause the controller 155 to transmit power to the light source 420.

To enable a function, such as a function of the motor or electronic communication, the controller 155 may set a flag or parameter within software to an enabled state that indicates a particular block of software is permitted to be executed, for example, to drive the motor in response to a trigger pull or to enable communication with the tool implement 110. To disable a function, the controller 155 may set the flag or parameter to a disabled state to indicate that the particular block of software is not permitted to be executed. The blocks of software may be associated with conditional statements that are executed by the controller 155 to evaluate the state of the flag or parameter to permit and prohibit the software. In some embodiments, the controller 155 uses other techniques to enable and disable functions.

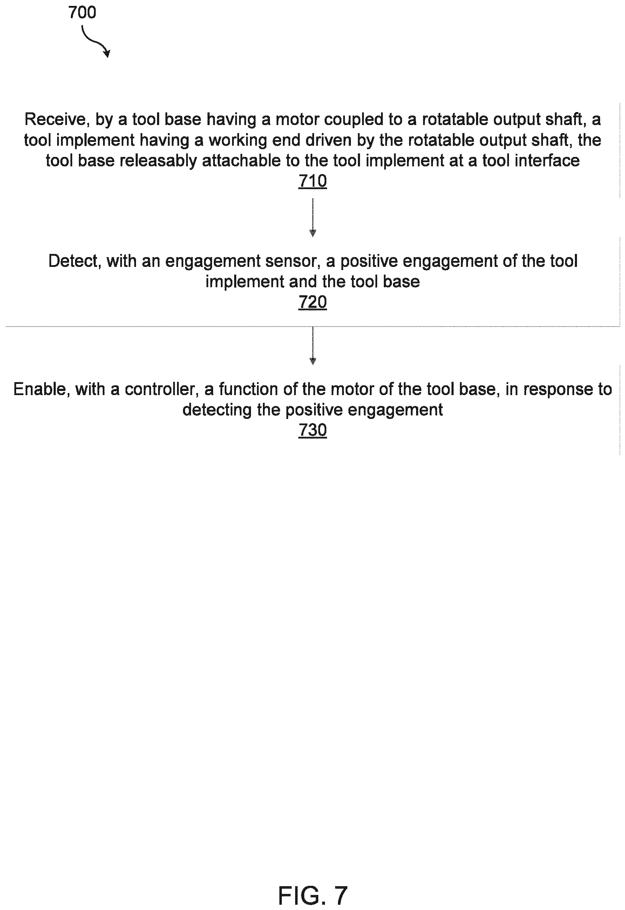

FIG. 7 illustrates a flow diagram 700 of a method for controlling the power tool 100. In block 710, the power tool implement 110 is received by the power tool base 105. The power tool implement 110 is received by the power tool base 105 in an axial direction along axis 180 resulting in the output spindle 175 engaging with the input spindle 400 and the terminal connectors 300 coupling with the terminal protrusions 415. The power tool implement 110 is rotated in the direction opposite the first direction 255 (e.g. clockwise as seen in FIG. 3B), which rotates the ring 225 and its actuation pin 236 toward the engagement sensor 237 (see, e.g., FIG. 4). In block 720, the power tool implement 110 continues rotation in the direction opposite the first direction 255 toward the locked position, causing the actuation pin 236 to actuate the engagement sensor 237, which detects the positive engagement of the power tool implement 110 and the power tool base 105. Accordingly, the motor 162 of the power tool base 105 is mechanically coupled to the working end 125 of the power tool implement 110, and the controller 155 is electrically coupled to the controller 254 and the light source 420.

In block 730, in the case that the positive engagement of the power tool implement 110 and the power tool base 105 is detected by the engagement sensor 237 in block 720, the controller 155 enables a driving function of the motor 162. For example, in block 730, the controller 155 enables a driving function of the motor 162 (e.g., the ability to drive the motor 162 in response to depression of the power actuation trigger 190). The driving function may be initially disabled (e.g., in block 710 at the time the implement 110 is attached to the power tool base 105). However, in response to detecting the positive engagement of the power tool implement 110 and the power tool base 105 in block 720, a driving function is enabled by the controller 155 in block 730. After the driving function of the motor 162 is enabled, the controller 155 drives the motor 162 in response to depression of the power actuation trigger 190 (functioning, for example, as a variable speed trigger or an on-off binary trigger). The power tool base 105 can then be operable with the selected power tool implement 110. In particular, in response to actuation of the power actuation trigger 190, the controller 155 controls the drive unit 160, including the motor 162, to drive the output spindle 175 to rotatably engage the input spindle 400 and drive the working end 125.

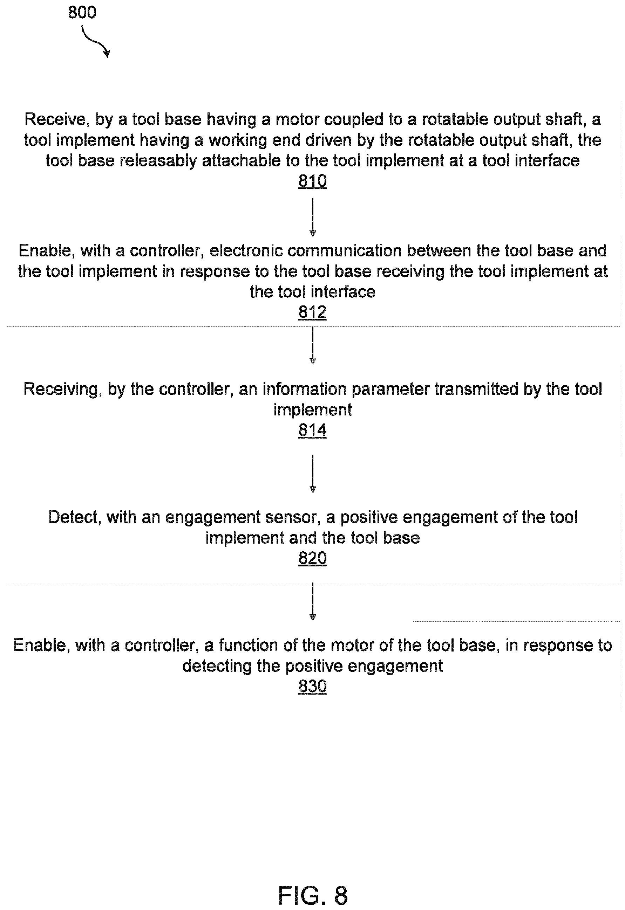

FIG. 8 illustrates a flow diagram 800 of a method for controlling the power tool 100. In block 810, the power tool implement 110 is received by the power tool base 105. The power tool implement 110 is inserted into the power tool base 105 in an axial direction along axis 180 resulting in the output spindle 175 engaging with the input spindle 400 and the terminal connectors 300 coupling with the terminal protrusions 415. In block 812, the controller 155 enables electronic communication with the power tool implement 110 via the terminal connectors 300 and the terminal protrusions 416. In some embodiments, the electronic communication between the power tool implement 110 and the controller 155 is initially disabled (e.g., at the time the implement 110 is attached to the power tool base 105). However, in response to the controller 155 detecting partial engagement, for example, detecting partial engagement with the engagement sensor 237 or detecting a change in circuit conductivity or capacitance on the terminals 300, the controller 155 enables the electronic communication.

In block 814, after electronic communication is enabled in block 812, the controller 254 of the power tool implement 110 transmits an information parameter 257 to the controller 155. The controller 155 may store the one or more information parameters 257 in the memory 159 as the one or more information parameters 157.

Subsequent to or in parallel with blocks 812 and 814, the power tool implement 110 is rotated in the direction opposite the first direction 255 (e.g. clockwise), which rotates the ring 225 and its actuation pin 236 toward the engagement sensor 237. In block 820, the power tool implement 110 continues rotation in the direction opposite the first direction 255 toward the locked position, causing the actuation pin 236 to actuate the engagement sensor 237, which detects the positive engagement of the power tool implement 110 and the power tool base 105. Accordingly, the motor 162 of the power tool base 105 is mechanically coupled to the working end 125 of the power tool implement 110, and the controller 155 is electrically coupled to the controller 254 and the light source 420.

In block 830, in the case that the positive engagement of the power tool implement 110 and the power tool base 105 is detected by the engagement sensor 237 in block 820, the controller 155 enables a driving function of the motor 162. For example, in block 830, the controller 155 enables a driving function of the motor 162 (e.g., the ability to drive the motor 162 in response to depression of the power actuation trigger 190). The driving function may be initially disabled (e.g., at the time the implement 110 is attached to the power tool base 105). However, in response to detecting the positive engagement of the power tool implement 110 and the power tool base 105 in block 820, a driving function is enabled by the controller 155 in block 830. After the driving function of the motor 162 is enabled, the controller 155 drives the motor 162 in response to depression of the power actuation trigger 190 (functioning, for example, as a variable speed trigger or an on-off binary trigger). The power tool base 105 can then be operable with the selected power tool implement 110. In particular, in response to actuation of the power actuation trigger 190, the controller 155 controls the drive unit 160, including the motor 162, to drive the output spindle 175 to rotatably engage the input spindle 400 and drive the working end 125.

In some embodiments, the flow diagram 800 is executed repeatedly or continuously by the power tool 100. For example, the controller 254 of the power tool implement 110 may periodically transmit information parameters 257 to the controller 155 of the power tool base 105 when the power tool implement 110 is coupled to the power tool base 105. Similarly, the engagement sensor 237 may periodically detect or confirm one or both of the partial engagement and the positive engagement of the power tool implement 110 and the power tool base 105.

In further embodiments of the flow diagrams 700 and 800, the controller 155 disables the previously enabled function(s) of the drive unit 160 in response to determining that positive engagement is no longer detected by the engagement sensor 237 (e.g., after steps 730 and 830, respectively). In some embodiments, the controller 155 does not disable the function(s) of the drive unit 160 in response to determining that positive engagement is no longer detected by the engagement sensor 237, but, rather, alerts the user via the status indicators 200. For example, if the tool implement 110 becomes partially disengaged from the power tool base 105, the controller 155 controls the status indicators 200 to alert the user. In some embodiments, in addition or alternative to the alerts, in response to determining that positive engagement is no longer detected by the engagement sensor 237 for a predetermined amount of time, the controller 155 disables the previously enabled function(s) of the drive unit 160. Accordingly, the user is provided the predetermined amount of time to re-engage the power tool implement 110 to the power tool base 105 before the controller 155 disables the previously enabled function(s). When positive engagement fails to be detected again within the predetermined amount of time, the controller disables the previously enabled function(s) of the motor 162.

Embodiments described herein enable a tool with interchangeable tool implements to disable or prevent motor operation of the tool when a tool implement is not positively engaged with a tool base. For example, in some embodiments, the tool 100 will prevent driving of a working end 125 of a partially attached tool implement 110, thereby preventing a user from operating on a workpiece when the tool implement 110 is not securely coupled to the tool base 105. Without such engagement detection features, operating the tool 100 on a workpiece when the tool implement 110 is not secure could lead to the tool implement 110 becoming fully disengaged from the tool base 105 during the operation.

Additionally, with respect to embodiments of FIG. 8, as the electronic communication may be enabled prior to or independent of enabling of a function of the motor 162, usability of the tool 100 may be improved. For example, one or more functions of the power tool implement 110 may be defined prior to the positive engagement being detected by the engagement sensor 237 (e.g., through the transmission of the information parameters 257). Alternatively, or in addition, one or more functions of the electronic communication may persist after positive engagement is no longer detected with the engagement sensor 237. For example, the controller 155 may control one or more of the implement status indicators 200 to visually indicate to a user that positive engagement is no longer detected by the engagement sensor 237.

Although the invention has been described with reference to certain embodiments, variations and modifications exist within the scope of one or more independent aspects of the invention as described.

## Claims

1. A power tool, comprising:
a tool implement including a working end that is drivable;
a tool base releasably attachable to the tool implement, the tool base including
a base housing,
a motor within the base housing, and
a rotatable output shaft coupled to the motor and configured to drive the working end of the tool implement when the tool base is attached to the tool implement;
an engagement sensor configured to indicate positive engagement of the tool implement and the tool base; and
a controller coupled to the engagement sensor and including an electronic processor, the controller configured to enable a function of the motor in response to receiving an indication of positive engagement from the engagement sensor.

2. The power tool of claim 1, wherein the function of the motor that is enabled is a driving function whereby, in response to actuation of a trigger, the controller drives the motor.

3. The power tool of claim 1 or claim 2, wherein the tool implement and the tool base are configured for electronic communication, and wherein the controller is configured to enable the electronic communication in response to the tool base receiving the tool implement.

4. The power tool of claim 3, wherein
the controller enables the electronic communication prior to enabling the function of the motor;
AND/OR
the controller is configured to receive an information parameter transmitted by the tool implement, wherein the information parameter transmitted by the tool implement defines at least one selected from the group consisting of a function of a trigger of the tool base, a function of a light trigger configured to control a light source of the tool implement, and a function of a control button of the tool base.

5. The power tool of any preceding claim, wherein the controller is further configured to disable the function of the motor previously enabled in response to receiving an indication of disengagement from the engagement sensor.

6. The power tool of any preceding claim, wherein the engagement sensor is rotationally fixed to the tool base, the tool base further includes an actuation projection that is configured to be rotated with respect to the tool base to selectively actuate the engagement sensor to indicate whether the tool implement is positively engaged to the tool base.

7. The power tool of claim 6, wherein, to positively engage the tool implement to the tool base, the tool implement is configured to be received by the tool base and to rotate a rotatable ring having the actuation projection to thereby cause the actuation projection to actuate the engagement sensor.

8. The power tool of claim 7, wherein
the rotatable ring is biased to a position indicative of a lack of positive engagement of the tool implement and the tool base;
AND/OR
the rotatable ring is positioned on a front side of a front plate, the engagement sensor is positioned on a rear side of the front plate, and the actuation projection extends through an arcuate opening of the front plate.

9. The power tool of any preceding claim 1, wherein the tool base releasably attaches to the tool implement in a plurality of orientations.

10. A method for controlling a power tool, comprising:
receiving, by a tool base having a motor coupled to a rotatable output shaft, a tool implement having a working end drivable by the rotatable output shaft, wherein the tool base and the tool implement are configured for releasable attachment;
detecting, with an engagement sensor, a positive engagement of the tool implement and the tool base; and
enabling, by a controller coupled to the engagement sensor, a function of the motor of the tool base, in response to detecting the positive engagement.

11. The method of claim 10, further comprising:
enabling, with the controller, electronic communication between the tool base and the tool implement in response to the tool base receiving the tool implement; and
receiving, by the controller, an information parameter transmitted by the tool implement.

12. The method of claim 11, wherein the controller enables the electronic communication prior to enabling the function of the motor.

13. The method of claim 11 or claim 12, wherein the information parameter is an identifier of the tool implement.

14. The method of any of claims 11 to 13, further comprising: defining, based on the information parameter transmitted by the tool implement, at least one selected from the group consisting of a function of a trigger of the tool base, a function of a light trigger configured to control a light source of the tool implement, and a function of a control button of the tool base.

15. The method of any of claims 10 to 14, further comprising:
disabling, by the controller, the function of the motor previously enabled in response to receiving an indication of disengagement from the engagement sensor;
AND/OR
providing, by the controller, an alert to a user indicating a lack of engagement in response to receiving an indication of disengagement from the engagement sensor;
AND/OR
disabling, by the controller, the function of the motor previously enabled in response to a predetermined amount of time elapsing after receiving an indication of disengagement from the engagement sensor;
AND/OR
indicating, by an implement status indicator of the tool base, a function status of the tool implement.
